# EUROPÄISCHE PATENTSCHRIFT

(11) **EP 2 622 669 B1**
(45) Veröffentlichungstag und Bekanntmachung des Hinweises auf die Patenterteilung: **08.10.2014**
(21) Anmeldenummer: 11751575.9
(22) Anmeldetag: 12.08.2011
(51) Int. Cl.: H01M 2/10, H01M 10/04, H01M 10/6554, H01M 10/052

(54) **GEHÄUSE FÜR EINEN LITHIUM-IONEN-AKKUMULATOR, EIN LITHIUM-IONEN-AKKUMULATOR SOWIE EIN KRAFTFAHRZEUG MIT EINEM LITHIUM-IONEN-AKKUMULATOR**
HOUSING FOR A LITHIUM-ION ACCUMULATOR, A LITHIUM-ION ACCUMULATOR, AND A MOTOR VEHICLE COMPRISING A LITHIUM-ION ACCUMULATOR
BOÎTIER POUR UN ACCUMULATEUR AU LITHIUM-ION, ACCUMULATEUR AU LITHIUM-ION AINSI QUE VÉHICULE AUTOMOBILE COMPORTANT UN ACCUMULATEUR AU LITHIUM-ION

(30) Priorität: 30.09.2010 DE 102010041701
(43) Veröffentlichungstag der Anmeldung: 07.08.2013
(73) Patentinhaber: Robert Bosch GmbH, 70442 Stuttgart (DE); Samsung SDI Co., Ltd., Yongin-si, Gyeonggi-do 446-577 (KR)
(72) Erfinder: GLESS, Michael, 70437 Stuttgart-Zazenhausen (DE); ANGERBAUER, Ralf, 71696 Möglingen (DE)
(74) Vertreter: Bee, Joachim
(86) Internationale Anmeldenummer: PCT/EP2011/063954
(87) Internationale Veröffentlichungsnummer: WO 2012/041592

(56) Entgegenhaltungen:
- EP-A1- 0 584 639
- DE-A1-102008 010 825
- DE-A1-102008 040 869
- DE-C1- 19 628 398
- JP-A- 6 188 023
- JP-A- 2004 327 125
- JP-A- 2006 179 385

## Beschreibung

Die Erfindung betrifft ein Gehäuse für einen Lithium-Ionen-Akkumulator mit einem Lithium-Ionen-Akkumulatorzellenstapel aus mindestens zwei prismatischen Lithium-Ionen-Akkumulatorzellen, einen Lithium-Ionen-Akkumulator sowie ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator.

### Stand der Technik

Lithium-Ionen-Akkumulatoren können nur in einem bestimmten Temperaturfenster effizient betrieben werden. Dieses Temperaturfenster erstreckt sich bis ca. 40°C, so dass eine Kühlung von Lithium-Ionen-Akkumulatoren während des Betriebes notwendig ist. Diese erfolgt in der Regel über Luft, wobei zudem noch Kühlplatten an den Lithium-Ionen-Akkumulatoren angeordnet werden, die zur optimalen Wärmeleitung mit diesen verspannt werden.

Lithium-Ionen-Akkumulatorzellen dehnen sich bei Betrieb und der sogenannten Formation aus. Laut D.P. Wilkinson, Effects of physical constraints an Li cyclability, Journal of Power sources 36, 1991, Seite 517 bis 527, wird die Morphologie des Lithiums in einer Lithium-Ionen-Akkumulatorzelle schon nach wenigen Lade-Entlade-Zyklen porös, wenn zu wenig Druck (p < 0,1 MPa) auf die Lithium-Ionen-Akkumulatorzelle ausgeübt wird, so dass sie nach wenigen Lade-Entlade-Zyklen versagt. Um eine optimale Leistung und eine lange Lebensdauer von Lithium-Ionen-Akkumulatorzellen zu erreichen, wird also ein definierter Druck, der auf diese einwirkt, benötigt. Herkömmliche Vorspannkonzepte, die diesen Druck aufbauen können, sind jedoch unflexibel, teuer und sehr raumgreifend.

Aus der DE 102008037039A1 sind ein Verfahren zum Festsetzen von Batteriezellen in einer Wanne und ein Festsetzungsmittel beziehungsweise Verspannungsmittel offenbart. Die Batteriezellen werden in eine Wanne eingebracht, und anschließend wird ein Verspannmittel in einen Zwischenraum zwischen Wanne und Batteriezellen eingebracht. Das Verspannmittel kann durch in einer Umhüllung befindliches Expansionsmittel, wie beispielsweise Montageschaum ausgebildet sein. Dieses Vorgehen ist jedoch nicht reversibel. Zudem lässt sich der auf die Batteriezellen einwirkende Druck nicht zuverlässig auf einen definierten Wert, der bei Lithium-Ionen-Akkumulatorzellen notwendig wäre, einstellen.

In der JP 2006179385 A wird ein Brennstoffzellenhalter beschrieben, bei dem durch die Verschiebbarkeit von Teilen der Seitenflächen entlang von schrägen Flächen die Brennstoffzellen zusammengepresst werden, wenn der Brennstoffzellenhalter mit einem Druckelement verschlossen wird.

### Offenbarung der Erfindung

Es wird erfindungsgemäß ein Gehäuse für einen Lithium-Ionen-Akkumulator gemäß Anspruch 1 mit einem Lithium-Ionen-Akkumulatorzellenstapel aus mindestens zwei prismatischen Lithium-Ionen-Akkumulatorzellen bereitgestellt, mit dem vorteilhafterweise in einfacher Weise gleichzeitig die Spannung zur Wärmeleitung auf eine Kühlplatte und die Spannung der Lithium-Ionen-Akkumulatorzellen zur besseren Zell-Performance erfolgen kann. Zudem wird eine sehr einfache Möglichkeit der Montage verwirklicht.

Das erfindungsgemäße Gehäuse weist eine rechteckige Grundplatte, eine zur Grundplatte planparallel ausgerichtete rechteckige Deckplatte, zwei rechteckige Anpressplatten, die zwischen Grundplatte und Deckplatte angeordnet sind und zwei einander gegenüberliegende Seitenflächen des Gehäuses ausbilden, sowie Mittel zum Verbinden von Grundplatte und Deckplatte auf.

Der Lithium-Ionen-Akkumulatorzellenstapel wird in einem durch vorgenannte Bestandteile gebildeten Innenraum des Gehäuses angeordnet. Um auf diesen den notwendigen Druck ausüben zu können, besitzen die Grundplatte und die Deckplatte entlang den zu den Anpressplatten weisenden Kanten jeweils einen Vorsprung. Dieser Vorsprung bildet eine schräge Ebene aus, die in Richtung des Innenraums des Gehäuses zur Grundplatte beziehungsweise Deckplatte führt. Der Vorsprung weist daher vorzugsweise einen dreieckigen Querschnitt auf. Korrespondierend zu den schrägen Ebenen der Grundplatte beziehungsweise Deckplatte weisen die zu den schrägen Ebenen der Grundplatte und der Deckplatte weisenden Seiten der Anpressplatten ebenfalls schräge Ebenen auf, so dass die schrägen Ebenen der Grundplatte und der Deckplatte an den jeweiligen schrägen Ebenen der Anpressplatten anliegen. Wird nun Druck auf die Deckplatte und/oder Grundplatte ausgeübt, werden die Anpressplatten entlang der schrägen Ebenen planparallel in Richtung des Innenraums verschoben und üben ihrerseits Druck auf den Lithium-Ionen-Akkumulatorzellenstapel aus.

Durch Variation der Schrägungswinkel lässt sich der Druck auf den Lithiumlonen-Akkumulatorzellenstapel in erforderlicher Weise bestimmen.

Die Anpressplatten können nach einer bevorzugten Ausführungsform zudem zum Innenraum gewölbt ausgestaltet sein, so dass hierüber ebenfalls Druck auf den Lithium-Ionen-Akkumulatorzellenstapel ausgeübt wird.

Der Druck auf die Deckplatte beziehungsweise die Grundplatte wird durch die Mittel zum Verbinden von Grundplatte und Deckplatte erzeugt.

Erfingdungsgemäß sind das Schrauben, die durch Durchgangsbohrungen, die im Bereich der Vorsprünge in Grundplatte und Deckplatte angeordnet sind, sowie durch Durchgangsöffnungen mit einem langlochförmigen Querschnitt in den Anpressplatten geführt sind. Da die Schrauben durch die Durchgangsöffnungen der Anpressplatten mit einem langlochförmigen Querschnitt geführt sind, sind diese leicht verschiebbar, ohne jedoch beim Zusammenbau des Gehäuses verrutschen zu können. Die zum Anziehen der Schrauben notwendigen Gewinde werden vorzugsweise in der Grundplatte vorgesehen, so dass die Schrauben einfach von oben angezogen oder gelöst werden können. Es kann aber auch eine Montage des Gehäuses auf einer beliebig gearteten Trägerplatte vorgesehen sein, die über entsprechende Gewinde verfügt.

Vorzugsweise ist an jeder der vier Ecken des Gehäuses eine Schraube vorgesehen.

Durch Verwendung von Schrauben in Verbindung mit einem Schrägungswinkel lässt sich der Druck, der auf den Lithium-Ionen-Akkumulatorzellenstapel einwirken soll, vorteilhafterweise sehr genau einstellen.

Eine alternative Ausführungsform besteht darin, statt der Schrauben zumindest ein spannbares Zugband um Grundplatte und Deckplatte herumzuführen und bei einer definierten Spannung zu verschließen. Je nach Breite des Zugbandes in Relation zur Breite des Gehäuses können mehrere Zugbänder verwendet werden. Das mindestens eine Zugband kann die Anpressplatten überdecken oder parallel zu diesen geführt werden.

Die Deckplatte des Gehäuses besitzt zumindest eine Durchbrechung, durch die die Anschlüsse der Lithium-Ionen-Akkumulatorzellen geführt werden können. Alternativ können diese aber auch an einer der Seitenflächen des Gehäuses herausragen.

Die Deckplatte und/oder auch die Grundplatte des Gehäuses können vorteilhafterweise als Kühlplatte ausgebildet sein.

Das Gehäuse beziehungsweise die Teile des Gehäuses können aus den verschiedensten Werkstoffen, wie Metall, Kunststoffen, verstärkten Kunststoffen oder Kompositmaterialien hergestellt werden. Eine kostengünstige Ausführungsform des Gehäuses wird unter Verwendung von umgeformten Blechen dargestellt.

Gegenstand der Erfindung ist zudem ein Lithium-Ionen-Akkumulator mit einem Lithium-Ionen-Akkumulatorzellenstapel aus mindestens zwei, vorzugsweise sechs prismatischen Lithium-Ionen-Akkumulatorzellen, der in einem Gehäuse angeordnet ist, das wie voranstehend beschrieben ausgestaltet ist.

Ein weiterer Gegenstand der Erfindung ist ein Kraftfahrzeug mit einem elektrischen Antriebsmotor zum Antreiben des Kraftfahrzeugs und einem mit dem elektrischen Antriebsmotor verbundenen oder verbindbaren erfindungsgemäßen Lithium-Ionen-Akkumulator.

Vorteilhafte Weiterbildungen der Erfindung sind in den Unteransprüchen angegeben und in der Beschreibung beschrieben.

Durch das erfindungsgemäße Gehäuse für einen Lithium-Ionen-Akkumulator ist es vorteilhafterweise möglich, einen Lithium-Ionen-Akkumulator aus prismatischen Lithium-Ionen-Akkumulatorzellen bereitzustellen, bei dem die Lithium-Ionen-Akkumulatorzellen mit definierbarem hohen Druck zur Erhöhung der Leistung verspannt werden können und gleichzeitig ein hoher Anpressdruck auf eine Kühlplatte gewährleistet werden kann. Zudem sind wenige Bauteile erforderlich, wodurch sich geringe Herstellungskosten bei gleichzeitig geringer Fehleranfälligkeit und damit geringer Ausfallwahrscheinlichkeit ergeben. Auch vereinfacht sich die Montage beziehungsweise die Wartung.

### Zeichnungen

Ausführungsbeispiele der Erfindung werden anhand der Zeichnungen und der nachfolgenden Beschreibung näher erläutert. Es zeigen:
Figur 1 in einer perspektivischen Ansicht ein erfindungsgemäßes Gehäuse für einen Lithium-Ionen-Akkumulator mit darin angeordneten Lithium-Ionen-Akkumulatorzellen,

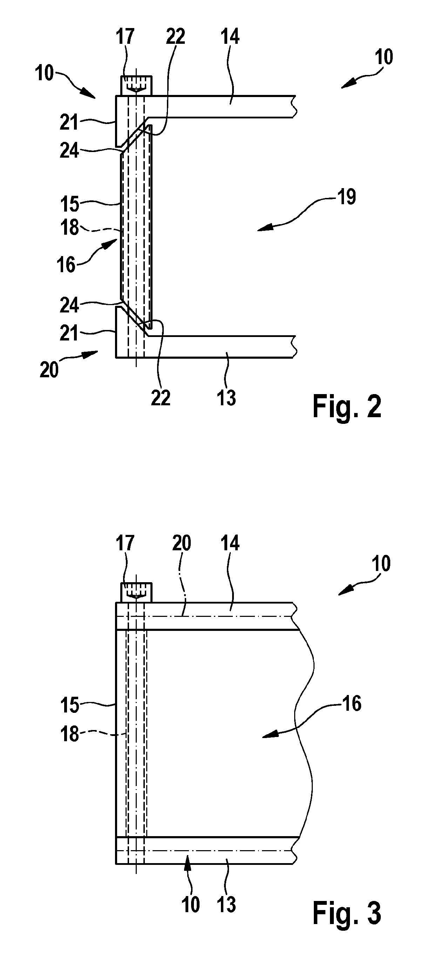

Figur 2 in einer seitlichen Detailansicht das erfindungsgemäße Gehäuse für einen Lithium-Ionen-Akkumulator und
Figur 3 in einer anderen seitlichen Detailansicht das erfindungsgemäße Gehäuse für einen Lithium-Ionen-Akkumulator.

### Ausführungsformen der Erfindung

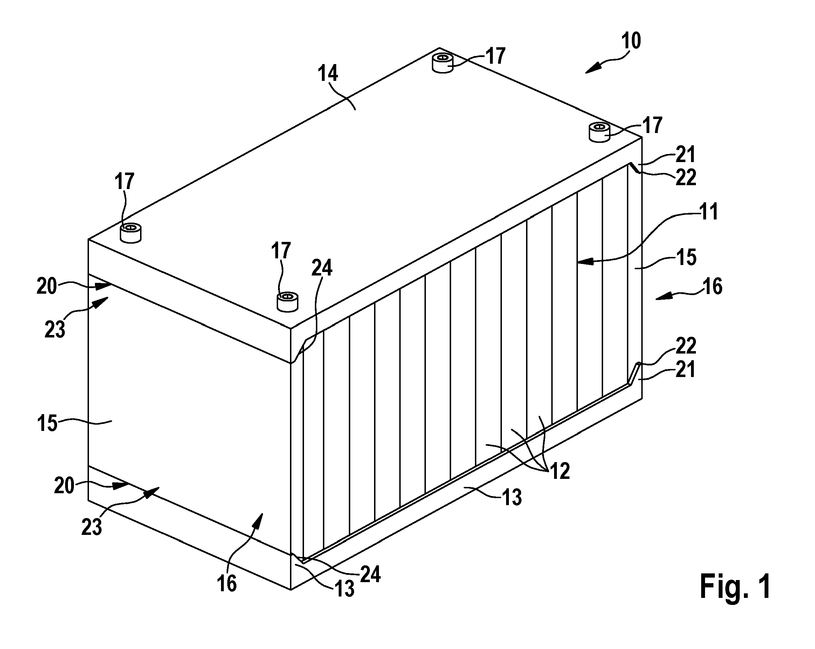

In Figur 1 ist ein Gehäuse 10 für einen Lithium-Ionen-Akkumulator dargestellt, in dem ein Stapel 11 aus nebeneinander gereihten prismatischen Lithium-Ionen-Akkumulatorzellen 12 befindlich ist. Das Gehäuse 10 besteht aus einer Grundplatte 13, einer Deckplatte 14 sowie zwei zwischen den Enden der Grundplatte 13 und der Deckplatte 14 angeordneten Anpressplatten 15, die zwei einander gegenüberliegende Seitenflächen 16 ausbilden, wobei vorgenannte Teile eine rechteckige Grundform aufweisen, so dass sich eine kubische Form des Gehäuses 10 ergibt. Die Grundplatte 13 und die Deckeplatte 14 sind durch Schrauben 17 verbunden, die in den vier Ecken der Grundplatte 13 und der Deckplatte 14 angeordnet sind. Die Schrauben 17 sind senkrecht durch Durchgangsöffnungen 18 der Anpressplatten 15 geführt, die einen langlochförmigen Querschnitt aufweisen, so dass die Anpressplatten 15 in Richtung des Innenraums 19 verschiebbar sind. An den zu den Anpressplatten 15 weisenden Kanten 20 der Grundplatte 13 und der Deckplatte 14 ist jeweils ein Vorsprung 21 ausgebildet, der eine schräge Ebene 22 ausbildet, die in Richtung des Innenraums 19 des Gehäuses 10 zur Grundplatte 13 beziehungsweise Deckplatte 14 führt, während an den Seiten 23 der Anpressplatten 15, die zur Grundplatte 13 beziehungsweise Deckplatte 14 weisen, korrespondierend zu den schrägen Ebenen 22 der Grundplatte 13 und der Deckplatte 14 schräge Ebenen 24 ausgebildet sind, so dass die schrägen Ebenen 22 der Grundplatte 13 und der Deckplatte 14 an den jeweiligen schrägen Ebenen 24 der Anpressplatten 15 angrenzen. Beim Anziehen der Schrauben 17 können die Anpressplatten 15 entlang der schrägen Ebene 24, soweit es die Durchbrechungen 18 zulassen, in den Innenraum 19 des Gehäuses 10 verschoben werden, wobei die Lithiumlonen-Akkumulatorzellen 12 seitlich verpresst werden. Gleichzeitig werden die Lithium-Ionen-Akkumulatorzellen 12 an die Grundplatte 13 und die Deckplatte 14 gepresst, die als Kühlplatten ausgestaltet sind.

## Patentansprüche

1. Ein Gehäuse für einen Lithium-Ionen-Akkumulator mit einem Lithium-Ionen-Akkumulatorzellenstapel (11) aus mindestens zwei prismatischen Lithium-Ionen-Akkumulatorzellen (12), **dadurch gekennzeichnet, dass** das Gehäuse (10) eine rechteckige Grundplatte (13), eine zur Grundplatte (13) planparallel ausgerichtete rechteckige Deckplatte (14), zwei rechteckige Anpressplatten (15), die zwischen Grundplatte (13) und Deckplatte (14) angeordnet sind und zwei einander gegenüberliegende Seitenflächen (16) des Gehäuses (10) ausbilden, sowie Mittel zum Verbinden von Grundplatte (13) und Deckplatte (14) aufweist, dass die Grundplatte (13) und die Deckplatte (14) entlang den zu den Anpressplatten (15) weisenden Kanten (20) jeweils einen Vorsprung (21) besitzen, der eine schräge Ebene (22) ausbildet, die in Richtung eines Innenraums (19) des Gehäuses (10) zur Grundplatte (13) beziehungsweise Deckplatte (14) führt, dass an den Seiten (23) der Anpressplatten (15), die zur Grundplatte (13) beziehungsweise Deckplatte (14) weisen, korrespondierend zu den schrägen Ebenen (22) der Grundplatte (13) und der Deckplatte (14) schräge Ebenen (24) ausgebildet sind, wobei die schrägen Ebenen (22) der Grundplatte (13) und der Deckplatte (14) an den jeweiligen schrägen Ebenen (24) der Anpressplatten (15) anliegen, und dass die Mittel zum Verbinden von der Grundplatte (13) und der Deckplatte (14) Schrauben (17) sind, die durch Durchgangsbohrungen (18), die im Bereich der Vorsprünge (21) in Grundplatte (13) und Deckplatte (14) angeordnet sind, sowie durch Durchgangsöffnungen (18) mit einem langlochförmigen Querschnitt in den Anpressplatten (15) geführt sind.

2. Das Gehäuse nach Anspruch 1, wobei die Anpressplatten (15) eine zum Innenraum (19) weisende Wölbung besitzen.

3. Das Gehäuse nach einem der Anspruche 1 oder 2, wobei die Deckplatte (13) zumindest eine Durchbrechung aufweist.

4. Das Gehäuse nach einem der Ansprüche 1 bis 3, wobei die Grundplatte (13) und/oder die Deckplatte (14) als Kühlplatte ausgestaltet sind beziehungsweise ist.

5. Ein Lithium-Ionen-Akkumulator mit einem Lithium-Ionen-Akkumulatorzellenstapel (11) aus mindestens zwei prismatischen Lithium-Ionen-Akkumulatorzellen (12), der in einem Gehäuse (10) nach einem der Ansprüche 1 bis 4 angeordnet ist.

6. Der Lithium-Ionen-Akkumulator nach Anspruch 5, wobei der Akkumulatorzellenstapel (11) sechs prismatische Lithium-Ionen-Akkumulatorzellen (12) umfasst.

7. Ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator gemäß Anspruch 5 oder 6.

## Claims

1. A housing for a lithium-ion accumulator having a lithium-ion accumulator cell stack (11) composed of at least two prismatic lithium-ion accumulator cells (12), **characterized in that** the housing (10) has a rectangular base plate (13), a rectangular cover plate (14) which is oriented plane-parallel with respect to the base plate (13), two rectangular pressure plates (15) which are arranged between the base plate (13) and the cover plate (14) and form two side faces (16), lying opposite one another, of the housing (10), as well as means for connecting the base plate (13) and cover plate (14), **in that** the base plate (13) and the cover plate (14) each have a projection (21) along the edges (20) pointing to the pressure plates (15), which projection (21) forms an oblique plane (22) which leads to the base plate (13) or cover plate (14) in the direction of an interior space (19) of the housing (10), **in that**, in a way which correspond to the oblique planes (22) of the base plate (13) and the cover plate (14) oblique planes (24) are formed on the sides (23) of the pressure plates (15) which point to the base plate (13) or cover plate (14), wherein the oblique planes (22) of the base plate (13) and of the cover plate (14) rest on the respective oblique planes (24) of the pressure plates (15), and **in that** the means for connecting the base plate (13) and the cover plate (14) are screws (17) which are led through continuous bores (18), which are arranged in the region of the projections (21) in the base plate (13) and cover plate (14), and through continuous openings (18) having an elongate-shaped cross-section in the pressure plates (15).

2. Housing according to Claim 1, wherein the pressure plates (15) have a bulge pointing to the interior space (19).

3. Housing according to one of Claims 1 or 2, wherein the cover plate (13) has at least one breakthrough.

4. Housing according to one of Claims 1 to 3, wherein the base plate (13) and/or the cover plate (14) are/is configured as a cooling plate.

5. A lithium-ion accumulator having a lithium-ion accumulator cell stack (11), composed of at least two prismatic lithium-ion accumulation cells (12), which accumulator cell stack (11) is arranged in a housing (10) according to one of Claims 1 to 4.

6. Lithium-ion accumulator according to Claim 5, wherein the accumulator cell stack (11) comprises six prismatic lithium-ion accumulator cells (12).

7. Motor vehicle having an electric drive motor for driving the motor vehicle and a lithium-ion accumulator according to Claim 5 or 6 which is connected or can be connected to the electric drive motor.

## Revendications

1. Boîtier pour accumulateur à ions lithium, présentant une pile (11) de cellules d'accumulateur à ions lithium constituée d'au moins deux cellules prismatiques (12) d'accumulateur à ions lithium, **caractérisé en ce que**
le boîtier (10) présente une plaque de base (13) rectangulaire, une plaque de recouvrement (14) rectangulaire orientée parallèlement au plan de la plaque de base (13), deux plaques rectangulaires de pressage (15) disposées entre la plaque de base (13) et la plaque de recouvrement (14) et formant deux surfaces latérales (16) mutuellement opposées du boîtier (10), ainsi que des moyens de raccordement de la plaque de base (13) et de la plaque de recouvrement (14),
**en ce que** le long des bords (20) orientés vers les plaques de pressage (15), la plaque de base (13) et la plaque de recouvrement (14) possèdent chacune une saillie (21) qui forme un plan oblique (22) qui conduit en direction d'un espace intérieur (19) du boîtier (10) en direction de la plaque de base (13) ou de la plaque de recouvrement (14),
**en ce que** des plans obliques (24) qui correspondent aux plans obliques (22) de la plaque de base (13) et de la plaque de recouvrement (14) sont formés sur les côtés (23) des plaques de pressage (15) tournés vers la plaque de base (13) ou la plaque de recouvrement (14),
**en ce que** les plans obliques (22) de la plaque de base (13) et de la plaque de recouvrement (14) reposent sur les plans obliques respectifs (24) des plaques de pressage (15) et
**en ce que** les moyens de raccordement de la plaque de base (13) et de la plaque de recouvrement (14) sont des vis (17) qui sont passées dans des alésages de passage (18) disposés au niveau des saillies (21) de la plaque de base (13) et de la plaque de recouvrement (14) ainsi que dans des ouvertures de passage (18) à section transversale en trou oblong ménagées dans les plaques de pressage (15).

2. Boîtier selon la revendication 1, dans lequel les plaques de pressage (15) présentent un bombement orienté vers l'espace intérieur (19).

3. Boîtier selon l'une des revendications 1 ou 2, dans lequel la plaque de recouvrement (13) présente au moins une perforation.

4. Boîtier selon l'une des revendications 1 à 3, dans lequel la plaque de base (13) et/ou la plaque de recouvrement (14) sont configurées comme plaques de refroidissement.

5. Accumulateur à ions lithium doté d'une pile (11) de cellule d'accumulateur à ions lithium constituée d'au moins deux cellules prismatiques (12) d'accumulateur à ions lithium disposé dans un boîtier (10) selon l'une des revendications 1 à 4.

6. Accumulateur à ions lithium selon la revendication 5, dans lequel la pile (11) de cellule d'accumulateur comporte six cellules prismatiques (12) d'accumulateur à ions lithium.

7. Véhicule automobile doté d'un moteur à entraînement électrique qui entraîne le véhicule automobile et d'un accumulateur à ions lithium selon les revendications 5 ou 6, raccordé ou apte à être raccordé au moteur électrique d'entraînement.
